# EUROPEAN PATENT SPECIFICATION

(11) **EP 3 537 769 B1**
(45) Date of publication and mention of the grant of the patent: **06.10.2021**
(21) Application number: 17868351.2
(22) Date of filing: 01.11.2017
(51) Int. Cl.: H04W 48/18, H04W 88/06, H04W 48/10, H04W 76/50, H04W 4/90

(54) **USER DEVICE AND ACCESS CONTROL METHOD**
BENUTZERVORRICHTUNG UND ZUGANGSSTEUERUNGSVERFAHREN
DISPOSITIF D'UTILISATEUR ET PROCÉDÉ DE COMMANDE D'ACCÈS

(30) Priority: 02.11.2016 JP 2016215713
(43) Date of publication of application: 11.09.2019
(73) Proprietor: NTT DOCOMO, INC., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP)
(74) Representative: Hoffmann Eitle
(86) International application number: PCT/JP2017/039592
(87) International publication number: WO 2018/084192

(56) References cited:
- EP-A1- 2 981 134
- WO-A1-2010/024111
- WO-A1-2015/171254
- WO-A2-2008/020291
- JP-A- 2012 191 353
- JP-A- 2014 060 780
- JP-A- 2016 005 089
- JP-A- 2016 517 231
- US-A1- 2010 240 338

## Description

### TECHNICAL FIELD

The present invention relates to a user equipment in a radio communication system.

### BACKGROUND ART

As defined in 3GPP (Non-Patent Document 1), in a radio communication system of the existing LTE (including LTE-Advanced), it is possible to configure whether a user equipment in an idle state can access a cell of a base station (in other words, the user equipment can camp on the cell or can establish RRC connection) using system information transmitted from the base station to the user equipment. Specifically, this can be configured using cellBarred in SIB1. When the value of cellBarred is barred, the user equipment is inhibited from accessing the cell.

In an existing radio communication system, a structure that an access of a user equipment only used by a business operator for a specific use such as a test is allowed is also defined (Non-Patent Document 1). Specifically, when the value of cellReservedForOperatorUse in SIB1 is reserved, the access to the cell is allowed for the user equipment used for a specific use only.

A next-generation mobile communication system (5G, NR (new RAT)) that aims to realize ultra-high capacity, ultra-low latency, and the like has been discussed. Hereinafter, this next-generation mobile communication system is referred to as NR. Moreover, a cell corresponding to the NR is referred to as a NR cell.

In discussion of NR, it has been come to an agreement that the priority is lowered for some functions of all functions of NR. Due to this, it is considered that at an introduction stage of the NR, only some functions of all functions of the NR are provided.
Patent Document 1 relates to methods for selecting and reselecting a cell from among a plurality of cells and further relates to a "normal coverage mode" and an "enhanced coverage mode".
Patent Document 2 relates to a cellular communications system in which a user device selects a cell with which to register based on whether a candidate cell can provide an emergency call service.
Patent Document 3 relates to supporting emergency communications. In this context, it is discussed that if communications in a cell are barred, the user equipment re-selects another Radio Access Technology or Public Land Mobile Network.
Patent Document 4 relates to cell selection and reselection based on service preference information indicating service preferences for different radio access technologies.

### CITATION LIST

### NON-PATENT DOCUMENT

Non-Patent Document 1: 3GPP TS 36.304 V13.3.0

### PATENT DOCUMENTS

Patent Document 1: EP 2 981 134 A1
Patent Document 2: WO 2010/024111 A1
Patent Document 3: US 2010/240338 A1
Patent Document 4: WO 2008/020291 A2

### SUMMARY OF THE INVENTION

### PROBLEM TO BE SOLVED BY THE INVENTION

It is considered that at an introduction stage of the NR, the NR is provided in dual connectivity with LTE which is already surface-deployed by hotspot deployment. After introduction of the NR, when surface deployment of the NR is accelerated, the same NR coverage as the LTE coverage is obtained and services can be provided solely by the NR regardless of LTE.

As described above, since only some functions are provided at the introduction stage of the NR, when the user equipment solely connects to the NR cell, there is a possibility that the user equipment cannot receive a specific service (for example, a publicly important service such as disaster notification). Moreover, there is a possibility that the user equipment does not support the function provided by the NR cell. Therefore, control may be performed such that the user equipment does not connect only to the NR cell using the structure such as cellbarred.

However, such uniform control that the user equipment is not allowed to access only the NR cell is not desirable because this may result in a decrease in system resource utilization efficiency. Therefore, a technique capable of allowing a user equipment to appropriately access an NR cell of which the function is restricted is required.

The technique capable of allowing a user equipment to appropriately access a NR cell of which the function is restricted is a technique required for general cells of which the function is expected to be restricted without being limited to the NR cell.

The disclosed technique has been made in view of the above-described circumstance, and an object thereof is to provide a technique for enabling a user equipment to appropriately access a cell of which the function is restricted.

### MEANS FOR SOLVING PROBLEM

The present invention is defined by the independent claims. Preferred embodiments are defined by the dependent claims. Further aspects are provided for facilitating the understanding of the invention. According to the disclosed technique, there is provided a user equipment in a radio communication system, including: a reception unit that receives access restriction information indicating that an access to a base station is restricted and service information indicating a service supported by the base station from the base station; and a control unit that determines that the user equipment can access the base station when the user equipment supports the service indicated by the service information and determines that the user equipment cannot access the base station when the user equipment does not support the service indicated by the service information.

### EFFECT OF THE INVENTION

According to the disclosed disclosure, a technique for enabling a user equipment to appropriately access a cell of which the function is restricted is provided.

### BRIEF DESCRIPTION OF DRAWINGS

Fig. 1 is a diagram illustrating a configuration of a radio communication system according to an aspect of the present invention;
Fig. 2 is a diagram illustrating a deployment example of a NR;
Fig. 3 is a sequence diagram for describing an operation of Exemplary Aspect 1;
Fig. 4 is a flowchart for describing Operation Example 1 of Exemplary Aspect 1;
Fig. 5 is a flowchart for describing Operation Example 1 of Exemplary Aspect 1;
Fig. 6 is a flowchart for describing Operation Example 1 of Exemplary Aspect 2;
Fig. 7 is a sequence diagram for describing Operation Example 1 of Exemplary Aspect 2;
Fig. 8 is a flowchart for describing Operation Example 2 of Exemplary Aspect 2;
Fig. 9 is a sequence diagram for describing Operation Example 1 of Exemplary Aspect 3;
Fig. 10 is a sequence diagram for describing Operation Example 2 of Exemplary Aspect 3;
Fig. 11 is a diagram for describing a configuration of a user equipment 20;
Fig. 12 is a diagram for describing a configuration of a base station 10; and
Fig. 13 is a diagram for describing a hardware configuration of the user equipment 20 and the base station 10.

### MODE(S) FOR CARRYING OUT THE INVENTION

Hereinafter, an aspect of the present invention will be described with reference to the drawings. The aspect to be described below is an example only, and an aspect to which the present invention is applied is not limited to the following aspect.

It is assumed that a radio communication system according to the present aspect at least supports an LTE communication scheme. Therefore, when the radio communication system operates, existing techniques defined by LTE can be used appropriately. However, the existing techniques are not limited to LTE. Moreover, the "LTE" mentioned in the present specification is used in a broad sense to include LTE-Advanced and schemes later than LTE-Advanced unless otherwise stated particularly. Moreover, the present invention can be also applied to communication schemes other than LTE.

In the present aspect, although terms such as PSS/SSS, SIB, MIB, cellBarred, cellReserved/ForOperatorUse, cell selection, cell reselection, UE, and other terms used in the existing LTE are used, these terms are used for the sake of convenience, and the same functions may be referred to as other names.

In the present aspect, "connect to a cell" and "access a cell" may be regarded as having the same meaning as "connect to a base station" and "access a base station". Moreover, being able to connect to (access) a cell may be regarded as having the same meaning as be able to camp on a cell.

### (System configuration and overview of operation)

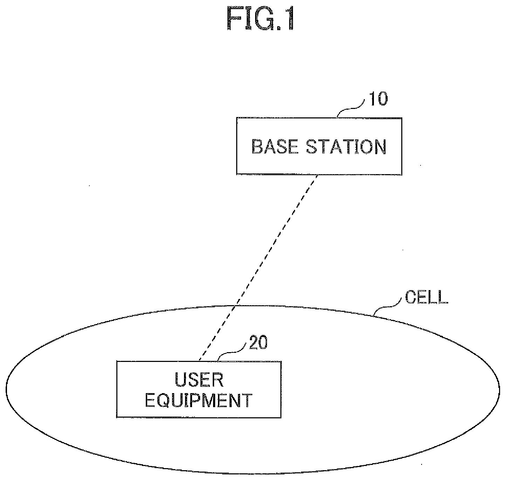

Fig. 1 illustrates a configuration of a radio communication system according to the present aspect (common for Exemplary Aspects 1 to 3). As illustrated in Fig. 1, the radio communication system according to the present aspect includes a user equipment 20 and a base station 10. Although one user equipment 20 and one base station 10 are illustrated in Fig. 1, this is an example only and a plurality of user equipments and a plurality of base stations may be provided. In the present application, the user equipment 10 is sometimes referred to as UE.

In the present aspect, the base station 10 is a base station of a specific RAT unless otherwise stated particularly. In the present aspect, although the specific RAT is NR, the specific RAT may be RAT other than NR.

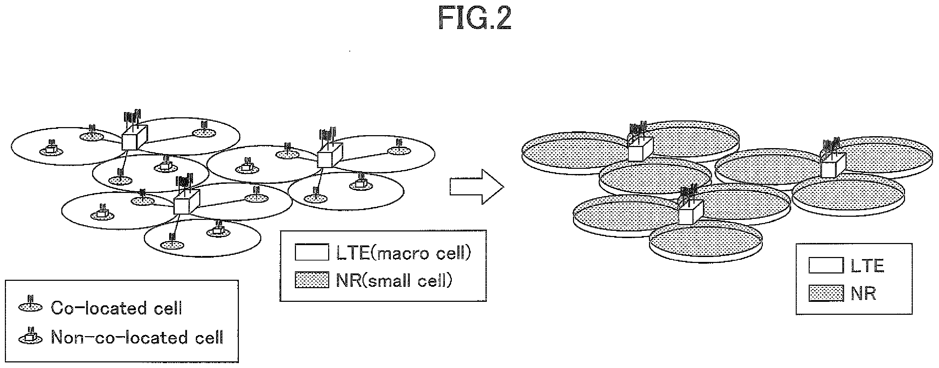

As a reference example, a deployment example of an NR which is considered at present is illustrated in Fig. 2. As illustrated on the left side of Fig. 2, at an introduction stage of the NR, the NR is provided in dual connectivity with LTE which is already surface-deployed by hotspot deployment. As illustrated in on the right side of Fig. 2, after introduction of the NR, when surface deployment of the NR is accelerated, the same NR coverage as the LTE coverage is obtained and services are provided solely by the NR regardless of LTE.

In the present aspect, Exemplary Aspects 1, 2, and 3 will be described as more specific operation examples. The overview of respective examples will be described below.

In Exemplary Aspect 1, when an access to the base station 10 is restricted (for example, barred or operator user reserved), the user equipment 20 which supports a specific service or function can access the base station 10 exceptionally.

In Exemplary Aspect 2, whether an access will be permitted or not is controlled depending on whether the base station 10 or the user equipment 20 supports a specific service without performing restriction (for example, barred or operator user reserved) on an access to the base station 10.

In Exemplary Aspect 3, it is controlled such that the user equipment 20 does not access a cell of the base station 10 solely. Hereinafter, respective examples will be described in detail.

### (Exemplary Aspect 1)

First, Exemplary Aspect 1 will be described. As described above, when an access to the base station 10 is restricted (for example, barred or operator user reserved), the user equipment 20 which supports a specific service or function can access the base station 10 exceptionally. For example, when the user equipment 10 supports Public warning/emergency alert as an example of a specific service, the user equipment 10 can perform an access to the base station 10 even when the user equipment 10 receives broadcast information (for example, cell barred/reservedForOperatorUse) indicating an access restriction from the base station 20.

A specific service (the identification information indicating the same) to which an access is not to be restricted may be configured (stored) in advance in the user equipment 20 and may be transmitted from the base station 10 to the user equipment 20 via broadcast information. In the latter case, identification information of a non-access restriction target service (the specific service) of Cellbarred/cellReservedForOperatorUse is included in MIB, SIB1, or the like transmitted from the base station 10, for example, together with the configuration information of Cellbarred/cellReservedForOperatorUse. Only one specific service may be set in the broadcast information and a plurality of specific services may be set therein. Moreover, the configuration information of Cellbarred/cellReservedForOperatorUse and the identification information of the non-access restriction target service (the specific service) may be notified via separate items of broadcast information.

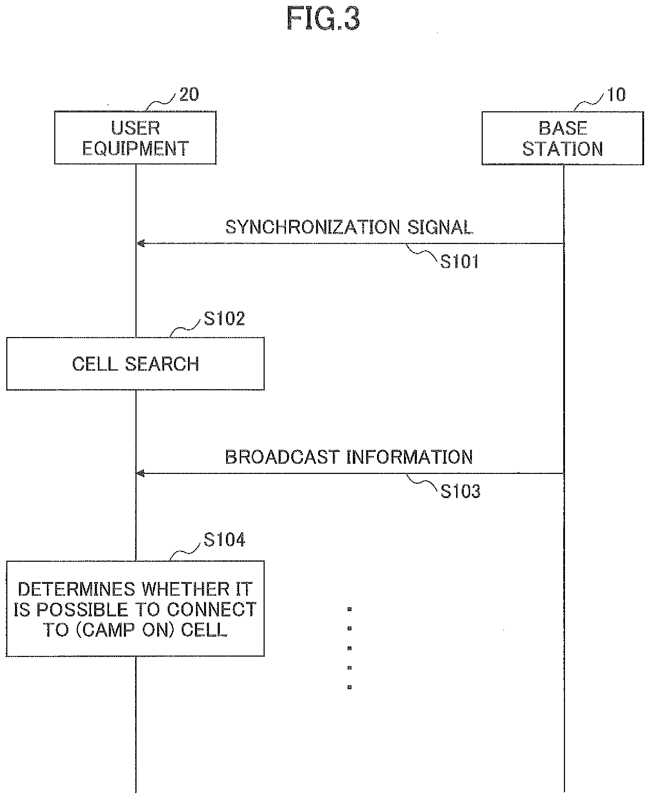

An example of the operation between the user equipment 20 and the base station 10 in Exemplary Aspect 1 will be described with reference to Fig. 3.

Upon receiving a synchronization signal transmitted from the base station 10 (step S101), the user equipment 20 performs a cell search (step S102) to detect a cell of the base station 10. The user equipment 20 receives broadcast information (for example, MIB and/or SIB) transmitted from the base station 10 (step S103) and determines whether the user equipment 20 can connect to (camp on) a cell of the base station 20 on the basis of the configuration information included in the broadcast information and the supporting service of the user equipment 20 itself (step S104).

When the determination result in step S104 indicates that the user equipment 20 can connect to the cell, cell selection/cell reselection ("/" means "or") defined in Non-Patent Document 1, for example, is executed and the user equipment 20 camps on the cell. When the determination result in step S104 indicates that the user equipment 20 cannot connect to the cell, the user equipment 20 performs a search for a cell of another RAT.

### <Operation Example 1 of Exemplary Aspect 1: Barred cell>

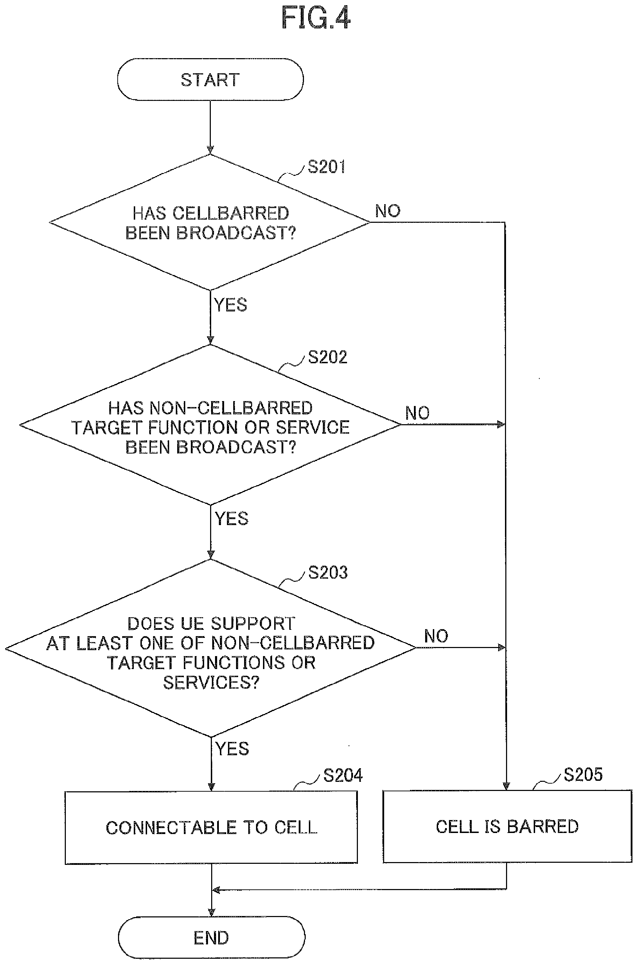

Operation Example 1 of the user equipment 20 in the determination of step S104 will be described with reference to Fig. 4. Fig. 4 illustrates an example of a case in which the base station 10 transmits Cellbarred (barred) via broadcast information. In the process illustrated in Fig. 4, it is assumed that the user equipment 20 has already received the broadcast information.

In step S201, the user equipment 20 determines whether Cellbarred is broadcast (that is, whether Cellbarred is included in the received broadcast information).

When the determination result in step S201 is "Yes," the user equipment 20 determines in step S202 whether a non-Cellbarred target function or service (function and service have the same meaning) is broadcast that is, the non-Cellbarred target function or service is included in the received broadcast information.

When the determination result in step S202 is "Yes," the user equipment 20 determines in step S203 whether the user equipment 20 itself supports the non-Cellbarred target function or service detected in step S202. In this example, for example, when there is one broadcast non-Cellbarred target function or service, the user equipment 20 determines whether the user equipment 20 itself supports the non-Cellbarred target function or service. Moreover, when a plurality of non-Cellbarred target functions or services is broadcast, the user equipment 20 determines whether the user equipment 20 itself supports at lease one of the plurality of non-Cellbarred target functions or services.

When the determination result in step S203 is "Yes," the user equipment 20 determines that the user equipment 20 can connect to the cell.

On the other hand, when the determination result in any one of steps S201, S202, and S203 is "No," the user equipment 20 determines that the cell is barred (connection is not permitted).

### <Operation Example 2 of Exemplary Aspect 1: Reserved cell>

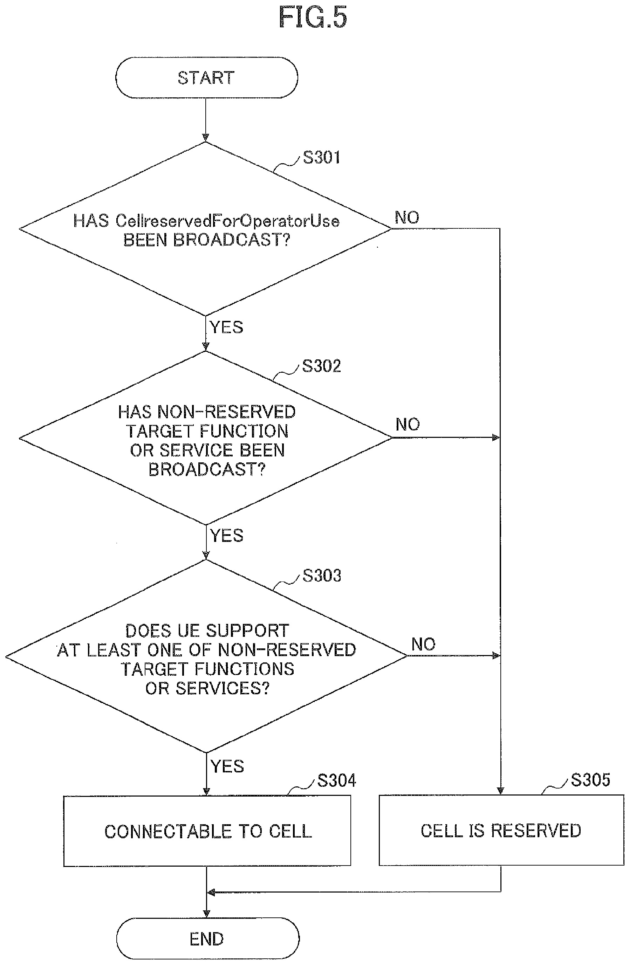

Operation Example 2 of the user equipment 20 in the determination of step S104 will be described with reference to Fig. 5. Fig. 5 illustrates an example in which the base station 10 transmits (broadcast) cellReservedForOperatorUse (reserved) via broadcast information. In the process illustrated in Fig. 5, it is assumed that the user equipment 20 has already received the broadcast information. Moreover, it is assumed that the user equipment 20 is not a special user equipment for OperatorUse.

In step S301, the user equipment 20 determines whether cellReservedForOperatorUse is broadcast, that is, cellReservedForOperatorUse is included in the received system information.

When the determination result in step S301 is "Yes," the user equipment 20 determines in step S302 whether a non-reserved target function or service is broadcast, that is, the non-reserved target function or service is included in the received broadcast information.

When the determination result in step S302 is "Yes," the user equipment 20 determines in step S303 whether the user equipment 20 itself support the non-reserved target function or service detected in step S302. In this example, for example, when there is one broadcast non-reserved target function or service, the user equipment 20 determines whether the user equipment 20 itself support the non-reserved target function or service. Moreover, when there is a plurality of non-reserved target functions or services, the user equipment 20 determines whether the user equipment 20 itself supports at least one of the plurality of non-reserved target functions or services.

When the determination result in step S303 is "Yes," the user equipment 20 determines that the user equipment 20 can connect to the cell.

On the other hand, when the determination result in any one of steps S301, S302, and S303 is "No," the user equipment 20 determines that the cell is reserved (the user equipment 20 is not permitted to connect to the cell).

According to the technique of Exemplary Aspect 1, it is possible to allow a user equipment that supports a specific function or service only to access a specific cell (for example, a NR cell) and to do not allow a user equipment that does not support the specific function or service to access the specific cell (that is, the user equipment is barred).

### (Exemplary Aspect 2)

Next, Exemplary Aspect 2 will be described. As described above, whether an access will be permitted or not is controlled depending on whether the base station 10 or the user equipment 20 supports a specific service in a specific RAT (in this example, the NR) without performing restriction (for example, barred or operator user reserved) on an access to the base station 10.

In the following description, a case in which the specific service is a public warning/emergency alert, PWS/ETEW or the like) will be described as an example. The public warning service is an example of the specific service, and the specific service may be a service (for example, MBMS, D2D, or the like) other than the public warning service. In this example, the public warning service will be referred to as "PWS/ETWS" for the sake of convenience.

Hereinafter, Operation Example 1 in which the base station 10 always supports PWS/ETWS and Operation Example 2 in which some base station supports PWS/ETWS and some base station does not support PWS/ETWS will be described.

### <Operation Example 1 of Exemplary Aspect 2: Base station 10 always supports PWS/ETWS>

In Operation Example 1, the base station 10 in an NR which the user equipment 20 accesses supports PWS/ETWS. Moreover, a base station in a RAT (LTE, UMTS, GSM, or the like) other than the RAT (NR) of the base station 10 also supports PWS/ETWS.

In this case, when the user equipment 20 itself does not correspond to PWS/ETWS of the NR, the user equipment 20 regards an NR cell as a non-cell selection/cell reselection target cell. Specifically, for example, the frequency of the NR cell is not included in a cell search target frequency set in advance to the user equipment 20.

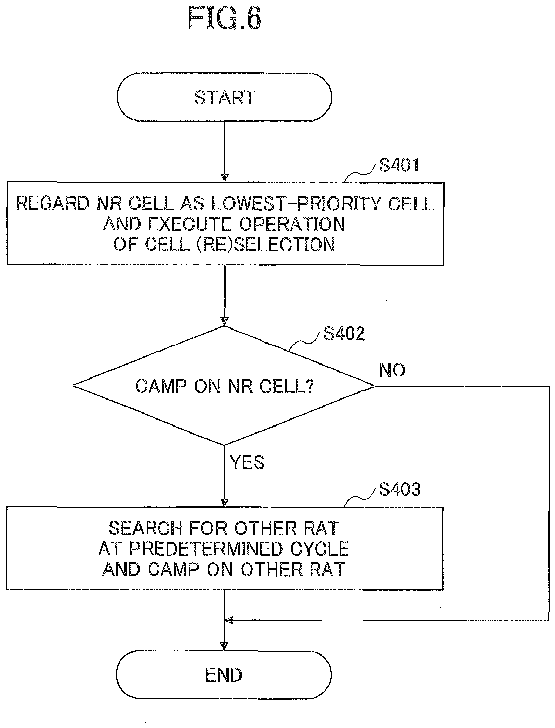

When the user equipment 20 does not support PWS/ETWS of the NR, the user equipment 20 may regard the NR cell as a lowest priority cell when performing cell selection/cell reselection instead of regarding the NR cell as a non-cell selection/cell reselection target cell. An operation example of this case will be described with reference to the flowchart of Fig. 6. In this example, it is assumed that the user equipment 20 supports PWS/ETWS in RAT (LTE, UMTS, GSM, or the like) other than NR.

As illustrated in Fig. 6, the user equipment 20 performs cell selection/cell reselection regarding the NR cell as a lowest priority cell (step S401). For example, during cell selection performed when the user equipment 20 is powered on or during cell reselection performed when the user equipment 20 moves from a camping cell to a neighboring cell, the user equipment 20 searches for a cell (in the case of cell reselection, a neighboring cell) on which the user equipment can camp and camps on the NR cell when a RAT cell (a cell of LTE, UMTS, GSM, or the like) other than the NR cell is not present and only the NR cell is detected (with reception intensity/reception quality of a predetermined threshold or higher). Moreover, the user equipment 20 camps on the cell when a RAT cell other than the NR cell is detected in the case of cell selection/cell selection.

When the user equipment 20 camps on the NR cell through cell selection/cell selection (step S402: Yes), the user equipment 20 searches for another RAT cell at a predetermined cycle (for example, one seconds) regardless of the reception quality (RSRP and/or RSRQ) of the NR cell, and the user equipment 20 camps on the other RAT cell through cell reselection when the other RAT cell is detected. As described above, in this example, although the user equipment 20 supports PWS/ETWS with respect to RAT other than NR, if the RAT other than NR includes a RAT that supports PWS/ETWS and a RAT that does not support PWS/ETWS, the user equipment 20 camps on the RAT cell when it was possible to detect a RAT that supports PWS/ETWS.

### <Operation Example 2 of Exemplary Aspect 2>

In Operation Example 2, a case in which although the user equipment 20 supports a specific service (in this example, PWS/ETWS) in all RATs that the user equipment 20 can access, the base station 10 of the NR does not support PWS/ETWS will be described. In this example, it is assumed that a base station in a RAT (LTE, UMTS, GSM, or the like) other than the NR supports PWS/ETWS. Moreover, although in this example, the specific service is PWS/ETWS, this is an example only.

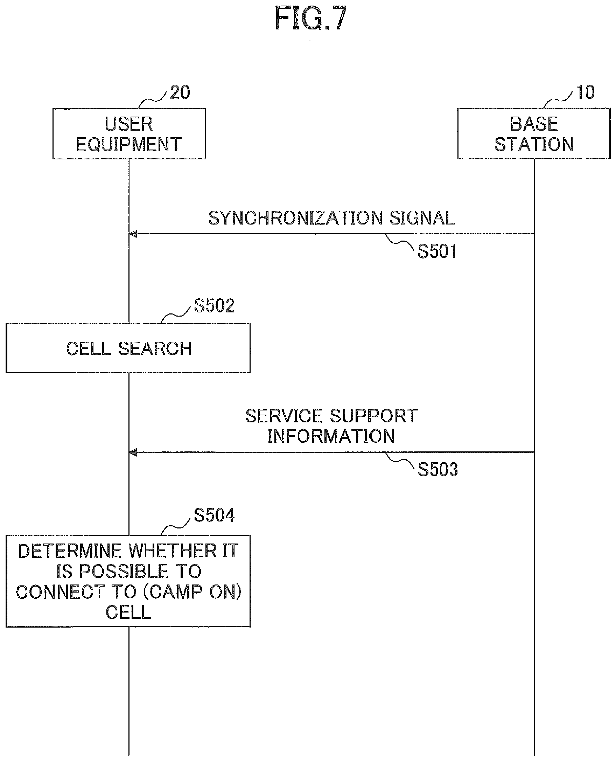

A basic operation of Operation Example 2 will be described with reference to the sequence diagram of Fig. 7. For example, when cell selection is executed, the user equipment 20 performs cell search by receiving a synchronization signal transmitted from the base station 10 (steps S501 and S502) and detects a cell of the base station 10.

The user equipment 20 receives service support information transmitted as broadcast information (for example, MIB or SIB) from the base station 10 (step S503). The user equipment 20 determines whether the base station 10 supports PWS/ETWS on the basis of the service support information and determines whether or not to camp on the cell of the base station 10 on the basis of the determination result (step S504).

The service support information is a list of sets made up of service identification information and information (for example, 1 indicates support and 0 indicates non-support) indicating whether the service is supported or not.

The service support information may be bitmap information indicating whether SIB corresponding to a service is supported or not. For example, when SIBs corresponding to Services A, B, and C are referred to as SIB-A, SIB-B, and SIB-C, respectively, the positions of the bits of a bitmap (for example, including three bits) are correlated with SIB-A, SIB-B, and SIB-C from the left side. In this case, when the bitmap is "101," for example, this means "SIB-A=Support, SIB-B=Non-support, and SIB-C=Support". The user equipment 20 can determine whether the base station 10 supports the specific service by receiving such bitmap information.

Such service support information as described above can be used as information on a neighboring cell for cell reselection. For example, when the user equipment 20 camps on the NR cell, the user equipment 20 receives service support information (for example, bitmap information) of a neighboring NR cell as information on the NR cell from the base station 10 in a camping NR cell as information for performing cell reselection (inter/intra-frequency cell reselection for NR) to another NR cell. The user equipment 20 determines whether the neighboring NR cell supports PWS/ETWS on the basis of the service support information and determines that the neighboring NR cell is a cell on which the user equipment 20 can camp through cell reselection when the neighboring NR cell supports the PWS/ETWS.

With regard to cell reselection, for example, when the user equipment 20 camps on a cell of RAT (for example, LTE) other than NR, the user equipment 20 receives service support information (for example, bitmap information) of a neighboring NR cell as information on the neighboring NR cell from a base station of a camping LTE cell as information for performing cell reselection to a NR cell. The user equipment 20 determines whether the neighboring NR cell supports PWS/ETWS on the basis of service support information and determines that the neighboring NR cell is a cell on which the user equipment can camp through cell reselection when the neighboring NR cell supports the PWS/ETWS.

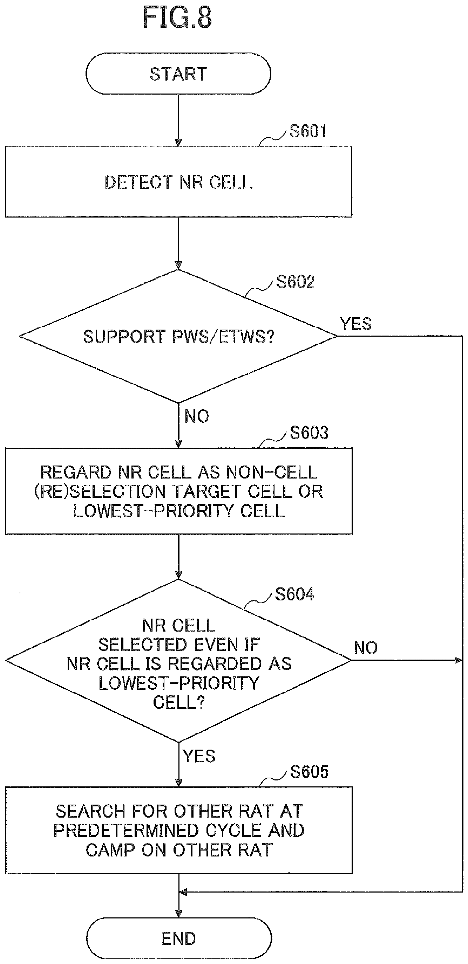

An example of the operation of the user equipment 20 in Operation Example 2 will be described with reference to the flowchart of Fig. 8.

The user equipment 20 detects an NR cell as a cell having a high reception level, for example, by cell search for cell selection/cell reselection (step S601). The user equipment 20 determines whether the detected NR cell supports PWS/ETWS on the basis of the service support information (for example, bitmap information) received from the base station of the camping cell. When the NR cell supports the PWS/ETWS, the user equipment 20 camps on the NR cell.

When the NR cell does not support the PWS/ETWS (step S602: No), the user equipment 20 regards the NR cell as a non-cell selection/cell reselection target cell or a lowest priority cell. When the NR cell is regarded as a non-cell selection/cell reselection target cell, for example, the user equipment 20 searches for another cell and performs cell selection/cell reselection on the other cell.

When the NR cell is regarded as a lowest priority cell and the user equipment 20 camps on the NR cell on the basis of the criterion of cell selection/cell reselection (step S604: Yes), the user equipment 20 searches a cell of another RAT at a predetermined cycle (for example, one seconds) regardless of the quality of the NR cell. When the cell of the other RAT is detected, the user equipment 20 camps on the cell of the other RAT through cell reselection (step S605). Moreover, another NR cell may be included in a target cell searched in step S605.

According to the technique of Exemplary Aspect 2, it is possible to allow the user equipment to access a base station (for example, the base station or NR) appropriately depending on a service supporting state of the user equipment and the base station.

### (Exemplary Aspect 3)

Next, Exemplary Aspect 3 will be described. In Exemplary Aspect 3, control is performed such that the user equipment 20 does not camp on the cell of the NR solely. Specifically, control is performed as follows.

As described with reference to Fig. 2, it is considered that at an introduction stage of the NR, the NR is introduced so as to overlay with LTE which is already surface-deployed as a hotspot. In an NR cell of the hotspot, it is considered that a service that allows the user equipment 20 to access only the NR cell is not provided. In this case, in the NR cell, it is necessary to transmit broadcast information minimally necessary for LTE-NR Dual Connectivity only and it is not necessary to transmit broadcast information necessary for accessing as a sole cell. As an example, as in LTE, a synchronization signal (PSS/SSS) and basic information (MIB) only such as a system bandwidth only may be transmitted.

As described above, in the NR cell, when the broadcast information minimally necessary for LTE-NR Dual Connectivity only is transmitted, a user equipment that technically supports a sole access to the NR cell cannot camp on the cell even if the user equipment tries to perform cell selection/cell reselection on the cell.

Trying cell selection/cell reselection on the cell even if it is not possible to camp on the cell is not efficient and is not desirable. Therefore, in Exemplary Aspect 3, control is performed such that the user equipment 20 does not access the cell of the NR solely. Hereinafter, Operation Examples 1 and 2 of Exemplary Aspect 3 will be described.

### <Operation Example 1 of Exemplary Aspect 3>

In Operation Example 1, in the NR cell, the broadcast information (for example, MIB (P-BCH) broadcast exclusively for LTE-NR Dual Connectivity, for example, includes information (referred to as non-standalone operation information) indicating that the cell is a non-standalone cell which is not operated solely.

When the user equipment 20 receives non-standalone operation information, the user equipment 20 excludes the NR cell from the targets of cell selection/cell reselection. The non-standalone operation information indicating a non-standalone cell may be the same information as cellBarred in the existing LTE.

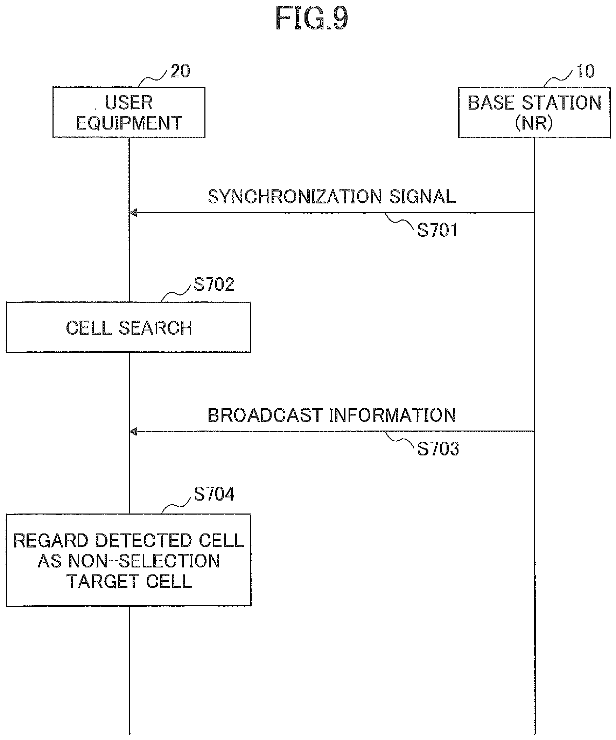

An example of the sequence of Operation Example 1 will be described with reference to Fig. 9. The base station 10 of the NR in Fig. 9 may be a base station (in the case of cell selection) of a cell on which the user equipment 20 is to camp or may be a base station (in the case of cell reselection) of a neighboring cell of a cell on which the user equipment 20 camps.

The user equipment 20 performs cell search in response to a synchronization signal received from the base station 10 and detects a cell of the base station 10 (steps S701 and S702).

The user equipment 20 receives broadcast information including non-standalone operation information from the base station 10 (step S703). The user equipment 20 regards the cell of the base station 10 as a non-selection (camping) target cell by detecting the non-standalone operation information from the broadcast information.

### <Operation Example 2 of Exemplary Aspect 3>

In Operation Example 2, in a cell (in this example, an LTE cell) on which the user equipment 20 camps, the user equipment 20 detects an NR cell which is not operated as a standalone cell with the aid of the broadcast information from the LTE cell.

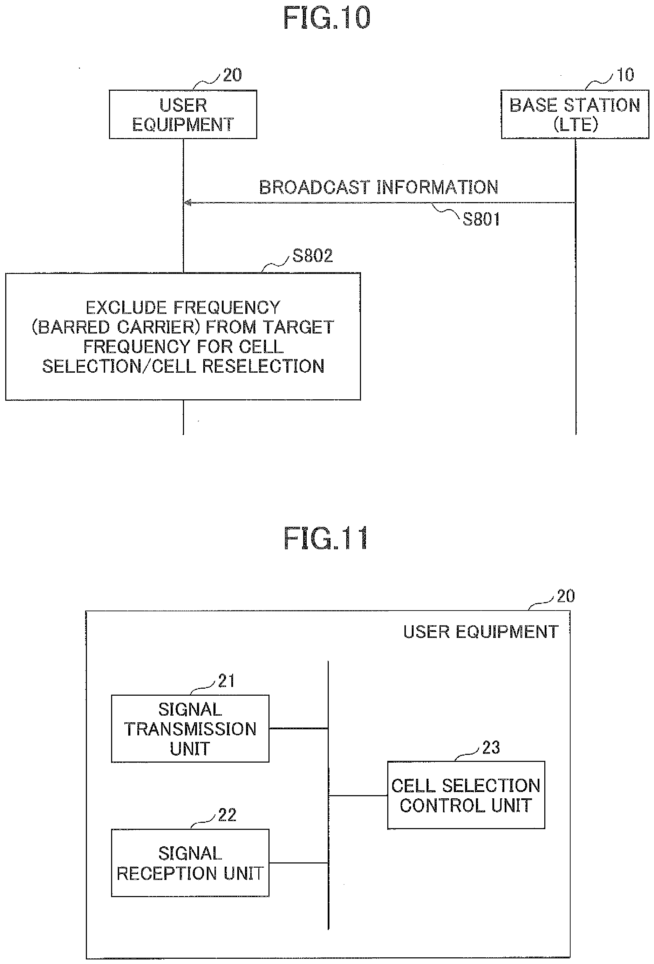

The sequence of Operation Example 2 will be described with reference to Fig. 10. In this example, it is assumed that the base station 10 is a base station of the LTE and the user equipment 20 camps on the cell of the base station 10.

The user equipment 20 receives the frequency (barred carrier) of the NR cell which is not operated as a standalone cell from the base station 10 as broadcast information (MIB, SIB, or the like) (step S801). As an example, the frequency of an NR cell which forms the LTE-NR Dual Connectivity but is not operated as a standalone cell is set as the barred carrier.

The user equipment 20 having received the information of the frequency (barred carrier) in step S801 excludes the frequency from the target frequencies of cell selection/cell reselection (step S802). That is, the user equipment 20 does not perform cell search on the frequency.

As for cell reselection, the base station 10 may not allow the user equipment 20 to perform cell reselection on the camping NR cell by not including the frequency of the NR cell in the system information for NR cell reselection.

The non-standalone operation information mentioned in Operation Example 1 may be used instead of the frequency (barred carrier) or in addition to the frequency (barred carrier) as the information notified via broadcast.

With the technique of Exemplary Aspect 3, since the NR cell which is not operated as a standalone cell can be excluded from the targets of cell selection/cell reselection, an unnecessary operation is reduced and it is possible to reduce the time required for cell selection/cell reselection.

### (Equipment configuration)

A functional configuration example of the user equipment 20 and the base station 10 that execute the operations of the aspect described above will be described. The user equipment 20 and the base station 10 each include all functions (including Exemplary Aspects 1 to 3) described in the present aspect. However, the user equipment 20 and the base station 10 each may include some (for example, Exemplary Aspect 1 only, Exemplary Aspect 2 only, Exemplary Aspect 3 only, Exemplary Aspects 1 and 3 only, Exemplary Aspects 2 and 3 only, or Exemplary Aspects 1 and 2 only) of all functions described in the present aspect.

### <User equipment 20>

Fig. 11 is a diagram illustrating an example of a functional configuration of the user equipment 20. As illustrated in Fig. 11, the user equipment 20 includes a signal transmission unit 21, a signal reception unit 22, and a cell selection control unit 23. The functional configuration illustrated in Fig. 11 is an example only. The functional classifications and the names of the functional units are not particularly limited as long as the operations according to the present aspect can be executed. For example, the cell selection control unit 23 may be included in the signal reception unit 22.

The signal transmission unit 21 is configured to generate lower-layer signals from higher-layer information and transmit the signals by radio. The signal reception unit 22 is configured to receive various signals by radio and acquire higher-layer information from the received signals. Moreover, the signal reception unit 22 includes a function of performing cell search by receiving a synchronization signal or the like. Furthermore, the signal reception unit 22 includes a function of measuring reception quality (RSRP, RSRQ, or the like) by receiving a reference signal or the like. The cell selection control unit 23 executes a process related to cell selection (including cell reselection) described in Exemplary Aspects 1 to 3.

More specifically, for example, the signal reception unit 22 receives access restriction information indicating that an access to the base station is restricted and service information indicating a service supported by the base station from the base station. The cell selection control unit 23 determines that it is possible to access the base station when the user equipment 20 supports a service indicated by the service information and determines that it is not possible to access the base station when the user equipment 20 does not support the service indicated by the service information. When the access is possible and the cell of the base station is detected by the cell search, for example, the cell selection control unit 23 performs a process of cell reselection/cell selection (cell reselection or cell selection) and the user equipment 20 camps on the cell when a condition is satisfied. Whether the user equipment 20 itself supports the service can be determined by referring to supporting service information stored in advance in the user equipment 20, for example.

When the user equipment 20 does not support a predetermined service (for example, a public warning service) of a predetermined RAT (for example, NR), the cell selection control unit 23 regards the cell of the predetermined RAT as a lowest-priority cell in cell selection or cell reselection and executes cell selection or cell reselection. When the user equipment 20 camps on the cell of the predetermined RAT by the cell selection or the cell reselection of the cell selection control unit 23, the signal reception unit 22 performs search for the cell of a RAT other than the predetermined RAT by receiving a synchronization signal in a cell of a RAT (for example, LTE) other than the predetermined RAT.

In the cell selection or cell reselection, the cell selection control unit 23 selects a cell that satisfies a predetermined condition for camping among the cells detected by the cell search and camps on the cell. Selecting the cell that satisfies the predetermined condition may be camping on the cell.

For example, the signal reception unit 22 receives service support information in the cell of the predetermined RAT from the base station. Moreover, when it is detected that the predetermined service in the cell of the predetermined RAT is not supported on the basis of the service support information, the cell selection control unit 23 determines that the cell of the predetermined RAT is a non-cell selection or cell reselection target cell or regards the cell of the predetermined RAT as a lowest-priority cell in the cell selection or cell reselection and executes cell selection or cell reselection.

When the non-standalone operation information is received from the base station, the signal reception unit 22 determines that the cell of the base station is a non-cell selection or cell reselection target cell. Moreover, when the frequency information of the barred carrier is received from the base station of the camping cell, the signal reception unit 22 does not perform cell search for the frequency.

### <Base station 10>

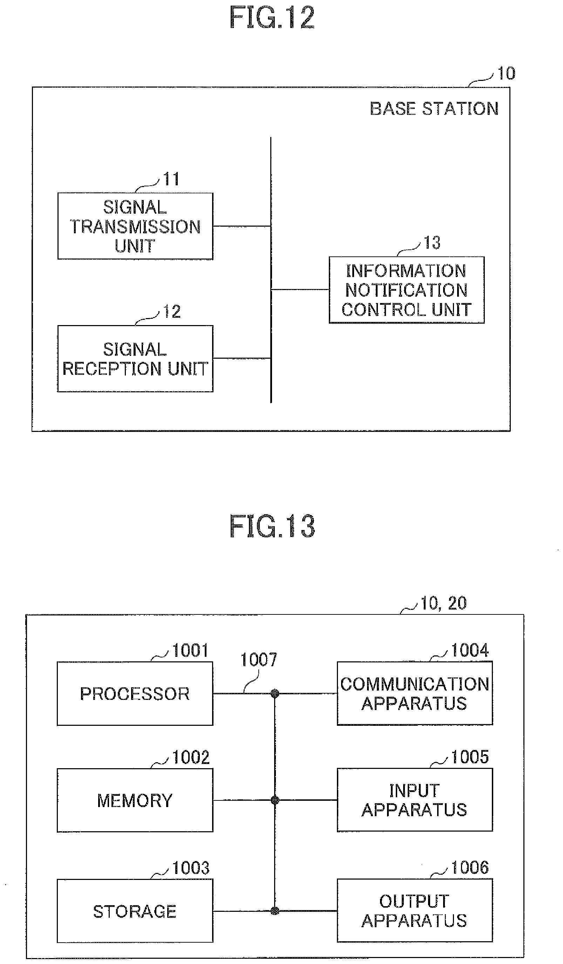

Fig. 12 is a diagram illustrating an example of a functional configuration of the base station 10. As illustrated in Fig. 12, the base station 10 includes a signal transmission unit 11, a signal reception unit 12, and an information notification control unit 13. The functional configuration illustrated in Fig. 12 is an example only. The functional classifications and the names of the functional units are not particularly limited as long as the operations according to the present aspect can be executed. For example, the information notification control unit 13 may be included in the signal transmission unit 11.

The signal transmission unit 11 is configured to generate lower-layer signals from higher-layer information and transmit the signals by radio. The signal reception unit 12 is configured to receive various signals by radio and acquire higher-layer information from the received signals. The information notification control unit 13 generates the information to be broadcast from the base station 10 and notifies the information (via the signal transmission unit 11) as described above in the present aspect.

### <Hardware configuration>

The block diagrams (Figs. 11 and 12) used in the description of the aspect illustrate functional blocks. These functional blocks (configuration units) are realized by an arbitrary combination of hardware and/or software. Moreover, means for realizing the respective functional blocks is not particularly limited. That is, the respective functional blocks may be realized by one apparatus which is physically and/or logically coupled and may be realized by a plurality of apparatuses which are physically and/or logically separated and which are directly and/or indirectly (for example, by cables and/or by radio) connected.

For example, the user equipment 20 and the base station 10 according to an aspect of the present invention may function as a computer that performs processing according to the present aspect. Fig. 13 is a diagram illustrating an example of a hardware configuration of the user equipment 20 and the base station 10 according to the present aspect. The user equipment 20 and the base station 10 may be physically configured as a computer apparatus which includes a processor 1001, a memory 1002, a storage 1003, a communication apparatus 1004, an input apparatus 1005, an output apparatus 1006, a bus 1007, and the like.

In the following description, the wording "apparatus" may be replaced with circuit, device, unit, or the like. The hardware configuration of the user equipment 20 and the base station 10 may include one or a plurality of apparatuses indicated by reference numerals 1001 to 1006 and illustrated in the drawings and may not include some apparatuses.

The respective functions of the user equipment 20 and the base station 10 are realized when predetermined software (program) is read onto hardware such as the processor 1001, the memory 1002, and the like, the processor 1001 performs an operation, and the communication by the communication apparatus 1004 and the data read and/or write in the memory 1002 and the storage 1003 are controlled.

The processor 1001 operates an operating system to control the entire computer, for example. The processor 1001 may be configured as a central processing unit (CPU) that includes an interface to a peripheral apparatus, a control apparatus, an operation apparatus, a register, and the like.

The processor 1001 reads a program (program codes), a software module, or data from the storage 1003 and/or the communication apparatus 1004 into the memory 1002 and executes various processes according to the program and the like. A program for causing a computer to execute at least a portion of the operations described in the aspect is used as the program. For example, the signal transmission unit 21, the signal reception unit 22, and the cell selection control unit 23 of the user equipment 20 may be realized by a control program which is stored in the memory 1002 and operated by the processor 1001. Moreover, the signal transmission unit 11, the signal reception unit 12, and the information notification control unit 13 of the base station 10 may be realized by a control program which is stored in the memory 1002 and operated by the processor 1001. Although it has been described that the above-described processes are executed by one processor 1001, the processes may be executed by two or more processors 1001 simultaneously or sequentially. One or more chips may be mounted in the processor 1001. The program may be transmitted from a network via a telecommunication circuit.

The memory 1002 is a computer-readable recording medium and may be configured by at least one of a ROM (Read Only Memory), an EPROM (Erasable Programmable ROM), an EEPROM (Electrically Erasable Programmable ROM), a RAM (Random Access Memory), and the like, for example. The memory 1002 may be referred to as a register, a cache, a main memory (main storage device), and the like. The memory 1002 can store a program (program codes), a software module, and the like that can be executed to perform a communication method according to an aspect of the present invention.

The storage 1003 is a computer-readable recording medium and may be configured by at least one of an optical disc such as a CD-ROM (Compact Disc ROM), a hard disk drive, a flexible disk, an optomagnetic disc (for example, a compact disc, a digital versatile disc, or a Blu-ray (registered trademark) disc), a smartcard, a flash memory (for example, a card, stick, or a key drive), a floppy (registered trademark) disk, a magnetic strip, and the like, for example. The storage 1003 may be referred to as an auxiliary storage apparatus. The above-descried storage medium may be an appropriate medium other than a database and a server that include the memory 1002 and/or the storage 1003.

The communication apparatus 1004 is hardware (transmission and reception device) for performing communication between computers via cables and/or a radio network and is also referred to as a network device, a network controller, a network card, a communication module, and the like, for example. For example, the signal transmission unit 21 and the signal reception unit 22 of the user equipment 20 may be realized by the communication apparatus 1004. Moreover, the signal transmission unit 11 and the signal reception unit 12 of the base station 10 may be realized by the communication apparatus 1004.

The input apparatus 1005 is an input device (for example, a keyboard, a mouse, a microphone, a switch, a button, a sensor, and the like) that receives the input from the outside. The output apparatus 1006 is an output device (for example, a display, a speaker, an LED lamp, and the like) that outputs information to the outside. The input apparatus 1005 and the output apparatus 1006 may have an integrated configuration (for example, a touch panel).

The respective apparatuses such as the processor 1001 and the memory 1002 are connected by the bus 1007 for communicating information. The bus 1007 may be configured by a single bus and may be configured by different buses for respective apparatuses.

The user equipment 10 and the base station 20 may be configured to include hardware such as a microprocessor, a digital signal processor (DSP), an ASIC (Application Specific Integrated Circuit), a PLD (Programmable Logic Device), an FPGA (Field Programmable Gate Array), and the like, and part or all of the respective functional blocks may be realized by the hardware. For example, the processor 1001 may be implemented by at least one of these items of hardware.

### <Summary of aspect>

As described above, according to the present aspect, there is provided a user equipment in a radio communication system, including: a reception unit that receives access restriction information indicating that an access to a base station is restricted and service information indicating a service supported by the base station from the base station; and a control unit that determines that the user equipment can access the base station when the user equipment supports the service indicated by the service information and determines that the user equipment cannot access the base station when the user equipment does not support the service indicated by the service information.

Due to this configuration, a technique for enabling a user equipment to appropriately access a cell of which the function is restricted is provided.

According to the present aspect, there is provided a user equipment in a radio communication system, including: a cell selection control unit that regards a cell of a predetermined RAT as a lowest-priority cell in cell selection or cell reselection when the user equipment does not support a predetermined service of the predetermined RAT and executes cell selection or cell reselection; and a reception unit that performs search for a cell of a RAT other than the predetermined RAT by receiving a synchronization signal in the cell of the RAT other than the predetermined RAT when the user equipment camps on the cell of the predetermined RAT by the cell selection or the cell reselection of the cell selection control unit.

Due to this configuration, a technique for enabling a user equipment to appropriately access a cell of which the function is restricted is provided.

The reception unit may periodically execute the search regardless of reception quality in the cell of the predetermined RAT. Due to this configuration, the possibility that the user equipment can camp on a cell in which the user equipment supports a predetermined service increases.

According to the present aspect, there is provided a user equipment in a radio communication system, including: a reception unit that receives service support information in a cell of a predetermined RAT from a base station; and a cell selection control unit that determines that the cell of the predetermined RAT is a non-cell selection or cell reselection target cell or regards the cell of the predetermined RAT as a lowest-priority cell of cell selection or cell reselection and executes cell selection or cell reselection when it is detected that a predetermined service is not supported in the cell of the predetermined RAT on the basis of the service support information.

Due to this configuration, a technique for enabling a user equipment to appropriately access a cell of which the function is restricted is provided.

When the user equipment camps on the cell of the predetermined RAT by the cell selection or the cell reselection of the cell selection control unit, the reception unit may perform search for a cell of a RAT other than the predetermined RAT by receiving a synchronization signal in the cell of the RAT other than the predetermined RAT. Due to this configuration, the possibility that the user equipment can camp on a cell which supports a predetermined service increases.

### <Supplementary explanation of aspect>

While the aspect of the present invention has been described, the disclosed invention is not limited to such an aspect, and various variations, modifications, alterations, and substitutions could be conceived by those skilled in the art. While specific examples of numerical values are used in order to facilitate understanding of the invention, these numerical values are examples only and any other appropriate values may be used unless otherwise stated particularly. The classification of items in the description is not essential in the present invention, and features described in two or more items may be used in combination, and a feature described in a certain item may be applied to a feature described in another item (unless contradiction occurs). It is not always true that the boundaries of the functional units or the processing units in the functional block diagram correspond to boundaries of physical components. The operations of a plurality of functional units may be physically performed by a single component. Alternatively, the operations of the single functional unit may be physically performed by a plurality of components. The orders in the sequence and the flowchart described in the aspect may be switched unless contradiction occurs. For convenience of explanation of processing, the user equipment 10 and the base station 20 have been explained using functional block diagrams. However, these devices may be implemented by hardware, software, or a combination thereof. The software that operates by a processor included in the user equipment 20 according to the aspect of the present invention and the software that operates by a processor included in the base station 10 according to the aspect of the present invention may be stored in a random access memory (RAM), a flash memory, a read only memory (ROM), an EPROM, an EEPROM, a register, a hard disk (HDD), a removable disk, a CD-ROM, a database, a server, and other appropriate storage media.

Notification of information is not limited the aspect and the aspect described in the present specification but may be performed by other methods. For example, notification of information may be performed via physical layer signaling (for example, DCI (Downlink Control Information) or UCI (Uplink Control Information)), upper-layer signaling (for example, RRC (Radio Resource Control) signaling, MAC (Medium Access Control) signaling, notification information (MIB (Master Information Block)), or SIB (System Information Block)), other signals, or by a combination thereof. Moreover, the RRC signaling may be referred to as a RRC signaling, and the RRC message may be an RRC Connection Setup message, a RRC Connection Reconfiguration message, or the like, for example.

The respective aspects and aspects described in the present aspect may be applied to LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), a system which uses other appropriate systems, and/or a next-generation system which is extended on the basis of these systems.

The orders in the processing procedures, the sequences, and the like in the respective aspects and aspects described in the present aspect may be switched unless contradiction occurs. For example, in the method described in the present specification, although various steps are illustrated in an exemplary order, the steps are not limited to the illustrated specific order.

A specific operation performed by the base station 10 in the present specification may be performed by an upper node depending on a situation. In a network including one or a plurality of network nodes including a base station 10, it is obvious that various operations performed to communicate with the user equipment 20 may also be performed by the base station 10 and/or other network nodes (for example, MME or S-GW but not limited thereto) other than the base station 10. Although a case in which there is only one network node other than the base station 10 has been illustrated in the above-described examples, a plurality of other network node combinations (for example, MME and S-GW) may be used.

The respective aspects and aspects described in the present specification may be used solely, may be used in combination, and may be switched and used according to execution.

The user equipment 20 may also be referred to by those skilled in the art as a subscriber station, a mobile station, a subscriber unit, a mobile unit, a radio unit, a remote unit, a mobile device, a radio device, a radio communications device, a remote device, a mobile subscriber station, an access terminal, a mobile terminal, a radio terminal, a remote terminal, a handset, a user agent, a mobile client, a client, or some other suitable terms.

The base station 10 may also be referred to by those skilled in the art as an NB (NodeB), an eNB (enhanced NodeB), a base station, or some other suitable terms.

The term "determining" used in the present specification may include various operations. The "determining" may include judging, calculating, computing, processing, deriving, investigating, looking up (for example, searching of tables, databases, or other data structures), and ascertaining. Moreover, the "determining" may include receiving (for example, receiving information), transmitting (for example, transmitting information), input, output, and accessing (for example, accessing data in a memory). Furthermore, the "determining" may include resolving, selecting, choosing, establishing, and comparing. That is, the "determining" may include an arbitrary operation.

The expression "on the basis of" used in the present specification does not mean "on the basis of only" unless otherwise stated particularly. In other words, the expression "on the basis of" means both "on the basis of only" and "on the basis of at least".

To the extent that the expressions "including" and "comprising" and variants thereof are used either in the present specification or the claims, these expressions are intended to be inclusive in a manner similar to the expression "having." Furthermore, the expression "or" used either in the present specification or the claims is not intended to mean "Exclusive-OR".

In the entire present disclosure, when articles such as a, an, and the are added to an element in the translated English text, for example, such an element to which these articles are added may be provided plurally unless it is clear from the context that the element is provided singly.

While the present invention has been described above in detail using the aspect, it is obvious to those skilled in the art that the present invention is not limited only to the aspect described in this specification. The present invention can also be embodied in other modified and altered forms without departing from the scope of the present invention as defined in the appended claims. It is therefore to be understood that the disclosure of this specification is intended for the purpose of description and exemplification but is not intended to limit the scope of the invention.

### EXPLANATIONS OF LETTERS OR NUMERALS

- 10: Base station
- 11: Signal transmission unit
- 12: Signal reception unit
- 13: Information notification control unit
- 20: User equipment
- 21: Signal transmission unit
- 22: Signal reception unit
- 23: Cell selection control unit
- 1001: Processor
- 1002: Memory
- 1003: Storage
- 1004: Communication apparatus
- 1005: Input apparatus
- 1006: Output apparatus

## Claims

1. A user equipment (20) comprising:
a reception unit (22) configured to receive service support information in a first cell from a base station; and
a control unit (23) configured to execute cell selection or cell reselection to a second cell that supports a predetermined service when detecting that the predetermined service is not supported in the first cell based on the service support information,
wherein if the service support information does not include information whether the predetermined service is supported in the first cell, it is determined that connection to the first cell is not permitted.

2. The user equipment (20) as claimed in claim 1, wherein the service support information is emergency service related information.

3. The user equipment (20) as claimed in claim 1 or 2, wherein the predetermined service is an emergency service.

4. An access control method executed by a user equipment (20), comprising:
receiving service support information in a first cell from a base station; and
executing cell selection or cell reselection to a second cell that supports a predetermined service when detecting that the predetermined service is not supported in the first cell based on the service support information,
wherein if the service support information does not specify whether the predetermined service is supported in the first cell, it is determined that connection to the first cell is not permitted.

## Patentansprüche

1. Benutzerendgerät (20), umfassend:
eine Empfangseinheit (22), die so ausgelegt ist, dass sie Dienstunterstützungsinformationen in einer ersten Zelle von einer Basisstation empfängt; und
eine Steuereinheit (23), die so ausgelegt ist, dass sie eine Zellenauswahl oder Zellen-Neuauswahl einer zweiten Zelle, die einen vorbestimmten Dienst unterstützt, ausführt, wenn auf Basis der Dienstunterstützungsinformationen erkannt wird, dass der vorbestimmte Dienst in der ersten Zelle nicht unterstützt wird,
wobei, wenn die Dienstunterstützungsinformationen keine Informationen darüber einschließen, ob der vorbestimmte Dienst in der ersten Zelle unterstützt wird, bestimmt wird, dass die Verbindung zur ersten Zelle nicht zulässig ist.

2. Benutzerendgerät (20) nach Anspruch 1, wobei es sich bei den Dienstunterstützungsinformationen um Informationen in Zusammenhang mit einem Notfalldienst handelt.

3. Benutzerendgerät (20) nach Anspruch 1 oder 2, wobei es sich bei dem vorbestimmten Dienst um einen Notfalldienst handelt.

4. Zugriffssteuerverfahren, das von einem Benutzerendgerät (20) ausgeführt wird, umfassend:
Empfangen von Dienstunterstützungsinformationen in einer ersten Zelle von einer Basisstation; und
Ausführen einer Zellenauswahl oder Zellen-Neuauswahl einer zweiten Zelle, die einen vorbestimmten Dienst unterstützt, wenn auf Basis der Dienstunterstützungsinformationen erkannt wird, dass der vorbestimmte Dienst in der ersten Zelle nicht unterstützt wird,
wobei, wenn die Dienstunterstützungsinformationen nicht spezifizieren, ob der vorbestimmte Dienst in der ersten Zelle unterstützt wird, bestimmt wird, dass die Verbindung zur ersten Zelle nicht zulässig ist.

## Revendications

1. Équipement utilisateur (20) comprenant :
une unité de réception (22) configurée pour recevoir des informations de prise en charge de service dans une première cellule à partir d'une station de base ; et
une unité de commande (23) configurée pour exécuter une sélection de cellule ou une nouvelle sélection de cellule pour une seconde cellule qui prend en charge un service prédéterminé lorsqu'il est détecté que le service prédéterminé n'est pas pris en charge dans la première cellule sur la base des informations de prise en charge de service,
dans lequel si les informations de prise en charge de service n'incluent pas d'informations établissant si le service prédéterminé est pris en charge dans la première cellule, il est déterminé qu'une connexion à la première cellule n'est pas autorisée.

2. Équipement utilisateur (20) selon la revendication 1, dans lequel les informations de prise en charge de service sont des informations liées à un service d'urgence.

3. Équipement utilisateur (20) selon la revendication 1 ou 2, dans lequel le service prédéterminé est un service d'urgence.

4. Procédé de commande d'accès exécuté par un équipement utilisateur (20), comprenant :
la réception d'informations de prise en charge de service dans une première cellule à partir d'une station de base ; et
l'exécution d'une sélection de cellule ou d'une nouvelle sélection de cellule pour une seconde cellule qui prend en charge un service prédéterminé lorsqu'il est détecté que le service prédéterminé n'est pas pris en charge dans la première cellule sur la base des informations de prise en charge de service,
dans lequel si les informations de prise en charge de service ne précisent pas si le service prédéterminé est pris en charge dans la première cellule, il est déterminé qu'une connexion à la première cellule n'est pas autorisée.
